# EUROPEAN PATENT APPLICATION

(11) **EP 2 835 734 A1**
(43) Date of publication of application: **11.02.2015**
(21) Application number: 14160935.4
(22) Date of filing: 20.03.2014
(51) Int. Cl.: G06F 3/16, G10L 15/00, G06F 3/0481

(54) **Apparatus and method for selecting a control object by voice recognition**

(30) Priority: 09.08.2013 KR 20130095044
(71) Applicant: Diotek Co., Ltd., Geumcheon-gu, Seoul (KR)
(72) Inventor: Shin, Jongwon, 423-746 Gyeonggi-do (KR); Kim, Semi, 151-015 Seoul (KR); Jung, Kanglae, 151-890 Seoul (KR); Doh, Jeongin, 137-930 Seoul (KR); Kim, Kyeongsun, 448-785 Gyeonggi-do (KR); Yoo, Hyejung, 158-871 Seoul (KR); Youn, Jehseon, 443-270 Gyeonggi-do (KR)
(74) Representative: Kazi, Ilya

(57) **Abstract**

In some examples, there are provided an apparatus and a method for selecting a control object through voice recognition. The apparatus for selecting a control object through voice recognition according to the present invention may include one or more processing devices, in which the one or more processing devices may be configured to obtain input information on the basis of a voice of a user, to match the input information to at least one identification information corresponding to a symbol obtained based on a control object, to obtain matched identification information matched to the input information among the identification information, and to select a control object corresponding to the matched identification information. There is an advantage in that since an electronic device can be controlled through voice recognition even when using an application that does not store a control command in advance, accessibility of a user to the electronic device can be improved.

## Description

### CROSS-REFERENCE TO RELATED APPLICATIONS

This application claims the priority of Korean Patent Application No. 2013-0095044 filed on August 9, 2013, in the Korean Intellectual Property Office, the disclosure of which is incorporated herein by reference.

### BACKGROUND OF THE INVENTION

### Field of the Invention

The present invention relates to an apparatus and a method for selecting a control object through voice recognition, and more particularly, to an apparatus and a method for selecting a control object through voice recognition by using identification information based on a symbol a control object.

### Description of the Related Art

As the number of users that use electronic devices such as a computer, a notebook PC, a smart phone, a tablet PC and navigation increases, the importance of a user interface that enables interaction between the electronic device and the user has grown.

In many cases, a typical user interface depends on a physical input through an input device such as a keyboard, a mouse, or a touch screen. However, it is not easy for visually handicapped people who cannot see a displayed screen or people who have trouble manipulating the input device such as the touch screen to manipulate the electronic device by using the aforementioned user interface.

When even people without a disability are in a tough situation where it is difficult for the people without a disability to manipulate the electronic device such as driving a car or carrying packages in both hands, it is not easy for the people without a disability to manipulate the electronic device by using the aforementioned user interface.

Therefore, there is a demand for development of a user interface capable of improving accessibility to the electronic device. As an example of the user interface capable of improving accessibility to the electronic device, there is a voice recognition technique that controls the electronic device by analyzing a voice of a user.

In order to control the electronic device through the voice of the user by using the voice recognition technique, a control command to be matched to the voice of the user needs to be previously stored in the electronic device.

When the control command to be matched to the voice of the user is stored in a platform, a basic setting of the electronic device, for example, a basic control of the electronic device such as the volume control or the brightness control of the electronic device can be performed through voice recognition.

In contrast, in order to control each individual application through the voice recognition, the control command to be matched to the voice of the user needs to be stored in each individual application.

Accordingly, in order to enable the voice recognition in an application that does not support the voice recognition or to further add a voice recognition function, it is required to develop or update the application needs so as to allow the control command to be matched to the voice of the user to be stored in the application.

However, since kinds of applications embedded in the electronic device are diversified from day to day, it is not easy to store the control command to be matched to the voice of the user all kinds of applications. Thus, there is a problem in that it is difficult to implement a general purpose voice recognition system to be interworked in various applications.

For this reason, the number of applications that support the voice recognition is small and even the application that supports the voice recognition has a limitation on operations to be performed through the voice recognition. Thus, there is substantially a limitation on improving the accessibility to the electronic device.

Accordingly, there is a demand for development of a technique capable of improving the accessibility to the electronic device through the voice recognition.

### SUMMARY OF THE INVENTION

In an aspect, the present invention may provide an apparatus and a method capable of controlling an electronic device through voice recognition even when a user uses an application that does not store a control command in advance.

In another aspect, the present invention may also provide an apparatus and a method capable of selecting a control object including an image through voice recognition.

Aspects of the present invention are not limited to the above described aspects, other aspects and/or objects not described above will be understood by a person who skilled in the art from the following description.

In order to obtain the above described aspect, the apparatus for selecting a control object through voice recognition according to an exemplary embodiment may include one or more processing devices, in which the one or more processing devices may be configured to obtain input information on the basis of a voice of a user, to match the input information to at least one identification information corresponding to a symbol obtained based on a control object, to obtain matched identification information matched to the input information among the identification information, and to select a control object corresponding to the matched identification information.

According to another optional characteristic of the present invention, the symbol may be obtained based on display information about the control object.

According to still another optional characteristic of the present invention, the symbol may be obtained based on application screen information.

According to still another optional characteristic of the present invention, the symbol may be obtained through optical character recognition (OCR).

According to still another optional characteristic of the present invention, the symbol may be obtained through image pattern matching.

According to still another optional characteristic of the present invention, the symbol may correspond to different identification information depending on applications run on the apparatus.

According to still another optional characteristic of the present invention, the input information may include voice pattern information obtained by analyzing a feature of the voice of the user, and the matching of the input information to the identification information may include matching of the identification information to the voice pattern information.

According to still another optional characteristic of the present invention, the input information may include text information recognized from the voice of the user through voice recognition, and the matching of the input information to the identification information may include matching of the identification information to the text information.

According to still another optional characteristic of the present invention, when the matched identification information matched to the input information does not exist, the one or more processing devices may set user designation identification information so as to correspond to a control object.

In order to obtain the above described aspect, the method for selecting a control object in a computing apparatus through voice recognition according to an exemplary embodiment may include obtaining input information on the basis of a voice of a user; matching the input information to at least one identification information corresponding to a symbol obtained based on a control object; obtaining matched identification information matched to the input information among the identification information; and selecting a control object corresponding to the matched identification information.

According to another optional characteristic of the present invention, the symbol may be obtained based on display information about the control object.

According to still another optional characteristic of the present invention, the symbol may be obtained based on application screen information.

According to still another optional characteristic of the present invention, the symbol may be obtained through optical character recognition (OCR).

According to still another optional characteristic of the present invention, the symbol may be obtained through image pattern matching.

According to still another optional characteristic of the present invention, the symbol may correspond to different identification information depending on applications run on the apparatus.

In order to obtain the above described aspect, there is provided the computer-readable medium that stores command sets according to an exemplary embodiment, in which when the command sets are executed by a computing apparatus, the command sets may cause the computing apparatus to obtain input information on the basis of a voice of a user, to match the input information to at least one identification information corresponding to a symbol obtained based on a control object, to obtain matched identification information matched to the input information among the identification information, and to select a control object corresponding to the matched identification information.

Other detailed contents of examples are included in the specification and drawings.

As set forth above, according to exemplary embodiments of the invention, there is an advantage in that since an electronic device can be controlled through voice recognition even when using an application that does not store a control command in advance, accessibility of a user to the electronic device can be improved.

According to exemplary embodiments of the invention, there is an advantage in that a control object can be selected through voice recognition regardless of the type of a component of the control object by selecting the control object including an image through the voice recognition.

Effects according to the present invention are not limited to the above contents, and more various effects are included in the present specification.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 illustrates a block diagram of an apparatus for selecting a control object according to an exemplary embodiment of the present invention;
FIG. 2 illustrates a flowchart of a method for selecting a control object according to an exemplary embodiment of the present invention;
FIG. 3 illustrates a symbol obtained based on display information about a control object and identification information corresponding to the obtained symbol;
FIG. 4 illustrates examples of a symbol and identification information corresponding to the obtained symbol;
FIG. 5 illustrates a schematic diagram of the apparatus for selecting a control object according to the exemplary embodiment of the present invention;
FIG. 6 illustrates a flowchart of a method for selecting a control object according to an exemplary embodiment of the present invention; and
FIG. 7 illustrates a schematic diagram of the apparatus for selecting a control object according to the exemplary embodiment of the present invention.

### DETAILED DESCRIPTION OF THE PREFERRED EMBODIMENT

Various advantages and features of the present invention and methods accomplishing thereof will become apparent from the following description of embodiments with reference to the accompanying drawings. However, the present invention is not limited to exemplary embodiment disclosed herein but will be implemented in various forms. The exemplary embodiments are provided by way of example only so that a person of ordinary skilled in the art can fully understand the disclosures of the present invention and the scope of the present invention. Therefore, the present invention will be defined only by the scope of the appended claims.

Although first, second, and the like are used in order to describe various components, the components are not limited by the terms. The above terms are used only to discriminate one component from the other component. Therefore, a first component mentioned below may be a second component within the technical spirit of the present invention.

The same reference numerals indicate the same elements throughout the specification.

Respective features of various exemplary embodiments of the present invention can be partially or totally joined or combined with each other and as sufficiently appreciated by those skilled in the art, various interworking or driving can be technologically achieved and the respective exemplary embodiments may be executed independently from each other or together executed through an association relationship.

When any one element for the present specification 'transmits' data or signal to other elements, it means that the element may directly transmit the data or signal to other elements or may transmit the data or signal to other elements through another element.

Voice recognition basically means that an electronic device analyzes a voice of a user and recognizes the analyzed content as text. Specifically, when a waveform of the voice of the user is input to the electronic device, voice pattern information can be obtained by analyzing a voice waveform by referring to an acoustic model. Further, text having the highest matching probability in identification information can be recognized by comparing the obtained voice pattern information with the identification information.

Input information in the present specification means information obtained through a part of the voice recognition or the whole voice recognition on the basis of the voice of the user. For example, the input information may be voice pattern information obtained by analyzing a feature of a voice waveform of the user. Such voice pattern information may include voice feature coefficients extracted from the voice of the user for each short-time so as to express acoustic features.

A control object in the present specification means an interface such as a button that is displayed on a screen of an apparatus for selecting a control object to receive an input of the user, and when the input of the user is applied to the displayed control object, the control object may perform a control operation that is previously determined by the apparatus for selecting a control object.

The control object may include an interface, such as a button, a check box and a text input field, that can be selected by the user through a click or a tap, but is not limited thereto. The control object may be all interfaces that can be selected through an input device such as a mouse or a touch screen.

The symbol in the present specification means a figure, a sign, or an image that can be interpreted as a certain meaning without including text. In the case of the control object represented as the symbol, the symbol of the control object may generally imply a function performed by the control object in the application. For example, the symbol **`►'** may generally mean that a sound or an image is played, and the symbol `+' or '-' may mean that an item is added or removed.

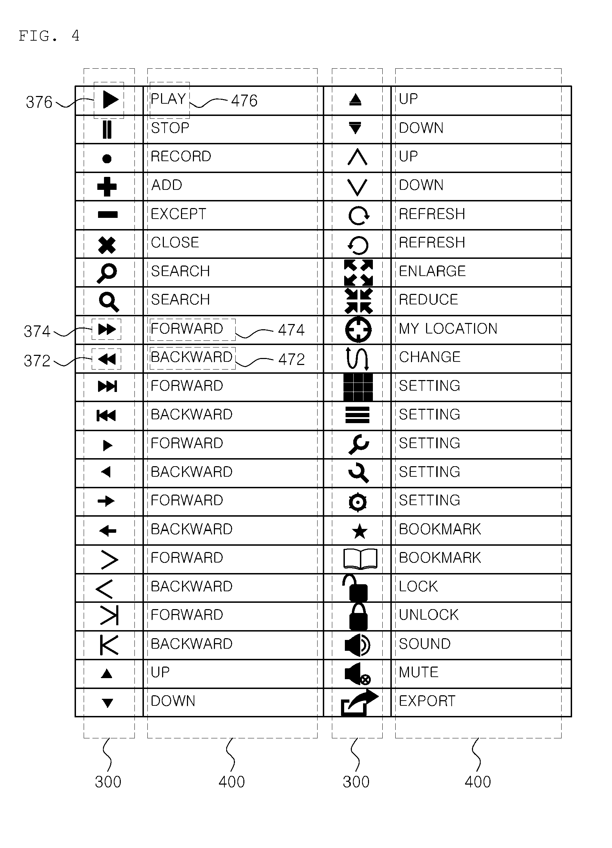

The identification information in the present specification means text that is automatically obtained based on the control object through the apparatus for selecting a control object and corresponds to symbol obtained based on the control object. the symbol and the first identification information may be in one-to-one correspondence, one-to-multi correspondence, multi-to-one correspondence, or multi-to-multi correspondence. The first identification information corresponding to the symbol will be described below with reference to FIG. 4.

When voice pattern information obtained by analyzing a feature of the voice of the user corresponds with the identification information that is text, the identification information having the highest matching possibility may be recognized.

When the identification information having the highest matching probability among the identification information is recognized, the control object corresponding to the recognized identification information is selected. Accordingly, even though the control command to be matched to the voice of the user is not stored, the control object can be selected by the apparatus for selecting a control object.

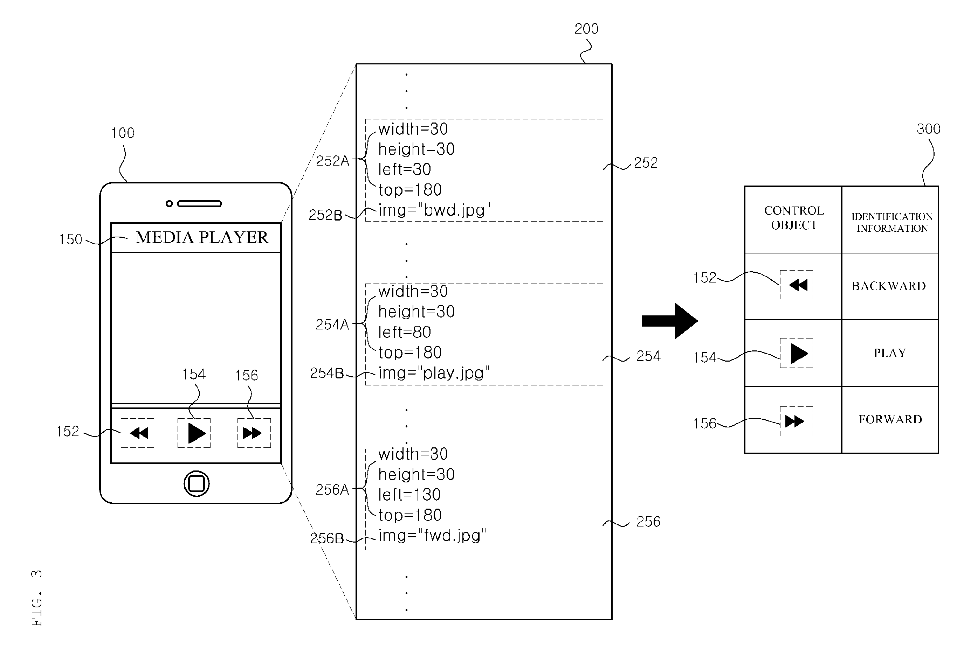

The symbol may be obtained based on display information about the control object, application screen information, and will be described in FIG. 3.

The display information about the control object in the present specification means information used to display a certain control object. For example, information about an image or icon of an object, and a size or position of the control object may be the display information. The control object may be displayed on the screen of the apparatus for selecting a control object on the basis of values of items constituting the display information or paths to reach the values.

The application screen information in the present specification means information used to display a certain screen in the application run in the apparatus for selecting a control object.

User input text in the present specification means text obtained by converting the voice of the user into a scheme representing text in the apparatus for selecting a control object through a voice recognition function, for example, ASCII codes.

Hereinafter, various embodiments will be described in detail with reference to the accompanying drawings.

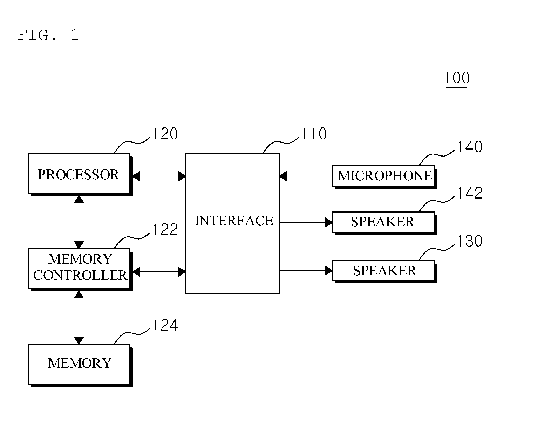

FIG. 1 illustrates a block diagram of an apparatus for selecting a control object according to an exemplary embodiment of the present invention.

Referring to FIG. 1, an apparatus for selecting a control object (hereinafter, also referred to as a "control object selecting apparatus") 100 according to the exemplary embodiment of the present invention a processor 120, a memory controller 122, and a memory 124, and may further include an interface 110, a microphone 140, a speaker 142, and a display 130.

The control object selecting apparatus 100 according to the exemplary embodiment of the present invention is a computing apparatus capable of selecting a control object through voice recognition, and includes one or more processing devices. The control object selecting apparatus may be devices such as a computer having an audio input function, a notebook PC, a smart phone, a tablet PC, navigation, PDA (Personal Digital Assistant), a PMP (Portable Media Player), a MP3 player, and an electronic dictionary, or may be a server capable of being connected to such devices or a distributed computing system including a plurality of computers. Here, the one or processing devices may include at least one or more processors 120 and the memory 124, and the plurality of processors 120 may share the memory 124.

The memory 124 stores a program or a command set, and the memory 124 may include a RAM (Random Access Memory), a ROM (Read-Only Memory), a magnetic disk device, an optical disk device, and a flash memory.

The processing devices are configured to obtain input information on the basis of a voice of a user, to match the input information to at least one identification information corresponding to a symbol obtained based on a control object, to obtain matched identification information matched to the input information among the identification information, and to select a control object corresponding to the matched identification information.

The memory controller 122 controls the access of units such as the processor 120 and the interface 110 to the memory 124.

The processor 120 performs operations for executing the program or the command set stored in the memory 124.

The interface 110 connects an input device such as the microphone 140 or the speaker 142 of the control object selecting apparatus 100 to the processor 120 and the memory 124.

The microphone 140 receives a voice signal, converts the received voice signal into an electric signal, and provides the converted electric signal to the interface 110. The speaker 142 converts the electric signal provided from the interface 110 into a voice signal and outputs the converted voice signal.

The display 130 displays visual graphic information to a user, and the display 130 may include a touch screen display that detects a touch input.

The control object selecting apparatus 100 according to the exemplary embodiment of the present invention selects a control object through voice recognition by using the program (hereinafter, referred to as a "control object selecting engine") that is stored in the memory 124 and is executed by the processor 120.

The control object selecting engine is executed in a background of the control object selecting apparatus 100 to obtain information about the control object from an application and causes the control object selecting apparatus 100 to select the control object through the voice recognition by using a symbol obtained based on the information about the control object.

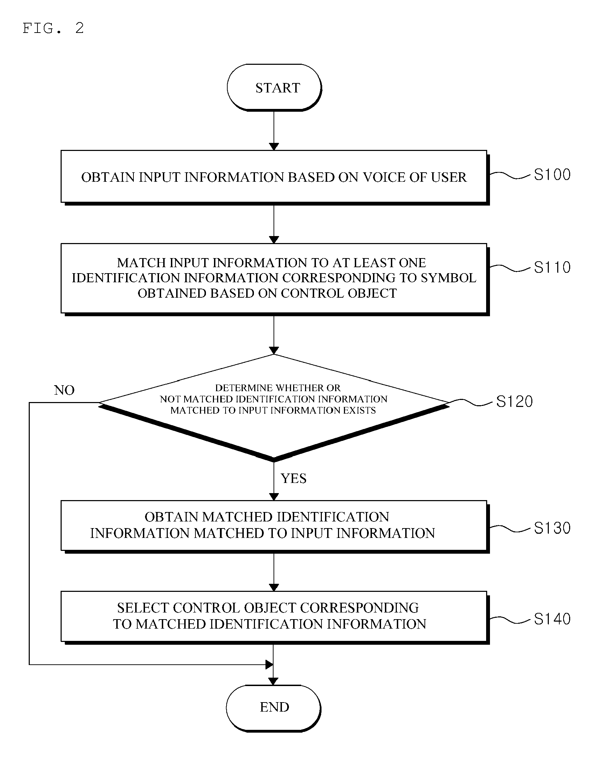

FIG. 2 is a flowchart of a method for selecting a control object according to an exemplary embodiment of the present invention. For the sake of convenience in description, the description will be made with reference to FIG. 3.

FIG. 3 illustrates a symbol obtained based on display information about the control object and identification information corresponding to the obtained symbol.

The control object selecting apparatus obtains input information on the basis of the voice of the user (S100).

Here, it has been described that the input information is voice pattern information obtained by analyzing a feature of the voice of the user, but is not limited thereto.

When the input information is obtained, the control object selecting apparatus matches the input information to at least one identification information corresponding to a symbol obtained based on the control object (S110).

Referring to FIG. 3, when a media player application 150 is running on the control object selecting apparatus 100, a 'backward button' 152, a 'forward button' 154, and a 'play button' 156 correspond to control objects.

According to the exemplary embodiment of the present invention, the symbol may be obtained based on the display information about the control object.

Referring to FIG. 3, display information 252, 254 and 256 of information 200 about control objects may include a 'width' item, a 'height' item, a 'left' item and a 'top' item which are items 252A, 254A and 256A for determining sizes and positions of the control objects and values of 'img' items 252B, 254B and 256B that provides links to images of the control objects.

The aforementioned items 252A, 254A, 256A, 252B, 254B and 256B are arbitrary defined for the sake of convenience in description, and the kinds, number and names of items of the display information 252, 254 and 256 about the control objects may be variously modified.

Referring to FIG. 3, the values of the 'img' items 252B, 254B and 256B that provides the links of the images of the control objects 152, 154 and 156 may be character strings for representing image file paths ("bwd.jpg," "play.jpg," and "fwd.jpg") of the control objects 152, 154 and 156 or the images themselves. Here, the "bwd.jpg," "play.jpg,' and "fwd.jpg" are merely examples, and the control objects may be displayed as images by various types of files.

Widths and heights of the images of the control objects 152, 154 and 156 are determined by the values of the 'width' item and the 'height' item among the items 252A, 254A and 256A for determining the sizes and positions of the control objects, and display positions of the control objects 152, 154 and 156 are determined by the values of the 'left' item and the 'top' item. In this way, areas where the control objects 152, 154 and 156 are displayed can be determined.

Referring to FIG. 3, the 'backward button' 152 may be displayed as an image by 'bwd.jpg' of an 'img' item 252B. Further, when image pattern matching or the optical character recognition (OCR) is performed on the "bwd.jpg," the symbol '◄◄' can be obtained. Similarly, when the image pattern matching or the optical character recognition (OCR) is performed on "play.jpg" and "fwd.jpg," the symbols '►' and '►►' can be obtained.

Here, the image pattern matching is a manner in which features are extracted from a target image such as "bwd.jpg," "play.jpg," or "fwd.jpg," and then an image having the same pattern or similar pattern from a comparison group that is previously set or is generated through a heuristic manner or posterior description of the user. The image pattern matching may be performed using template matching, neural network, and hidden Markov model (HMM), but is not limited thereto. The image pattern matching may be performed by various methods.

The symbol may be obtained by the control object selecting engine and stored in the memory, but is not limited thereto. The symbol may be obtained by an application being rung and stored in the memory.

As described above, the symbol obtained based on the control object corresponds to the identification information. The identification information corresponding to the symbol will be described with reference to FIG. 4.

FIG. 4 illustrates examples of a symbol and identification information corresponding to the symbol.

The symbols '◄◄,' '►►' and '►' 352, 354 and 356 can be obtained as the symbols of the 'backward button' 152 (see FIG. 3), the 'forward button' 154 (see FIG. 3) and the 'play button' 156 (see FIG. 3).

As illustrated in FIG. 4, the obtained symbols correspond to the first identification information. Referring to FIG. 4, in the case of the symbol '◄◄' 352, first identification information 'forward' 452 can be obtained, in the case of the symbol `►►' 354, first identification information 'forward' 454 can be obtained, and in the case of the symbol '►' 356, first identification information 'play' 456 can be obtained. When the input information matched to the obtained identification information is obtained, the control object corresponding to the identification information, that is, the control object represented as the symbol corresponding to the identification information is selected.

Meanwhile, the symbol 300 illustrated in FIG. 4 or the identification information 400 corresponding to the symbol are merely examples, and the kinds and number of the symbols and the identification information corresponding to the symbol may be variously implemented.

For example, it is not required that one symbol corresponds to one identification information, and since meanings of symbols may be different depending on applications, one symbol may correspond to a plurality of identification information having different meanings from each other.

As stated above, when one symbol corresponds to the plurality of identification information, the plurality of identification information may be prioritized, and the matched identification information may be determined depending on a priority.

That is, since the symbol `►' 356 is similar to a symbol '►' 358, the symbol `►' 356 may correspond to 'play' and 'forward' as the identification information. In this case, when the input information is obtained from the user's voice "forward," A criterion for selecting the control object from the 'forward button' 154 and the 'play button' 156 is needed.

Accordingly, the identification information 'forward' may have the first priority for the 'forward button' 154. The identification information 'play' may have the first priority and the identification information `forward' may have the second priority for the 'play button' 156. When the input information is obtained from the user's voice "forward," the 'forward button' 154 corresponding to the identification information 'forward' having the first priority may be selected.

Moreover, one symbol may correspond to the first identification information having different meanings depending on applications. For example, the symbol `►' 356 may correspond to the identification information 'play' in the media player application, whereas the symbol `►' 356 may correspond to the identification information 'forward' in the web browser or an electronic book application.

The obtained voice pattern is compared with the identification information through the matching of the identification information to the input information, that is, the matching of the identification information to the voice pattern information, and the identification information having the same pattern as or the most similar pattern to the voice pattern is determined.

Meanwhile, by encoding the identification information for each phoneme or each certain section by a method of encoding the voice pattern information from the voice of the user, the voice pattern information and the identification information may be matched to each other. The identification information and the voice pattern information may be matched through static matching, cosine similarity comparison, or elastic matching.

The control object selecting apparatus determines whether or not matched identification information matched to the input information exists as a matching result of the obtained identification information to the input information (S120).

As stated above, the identification information having the same pattern as or the most similar pattern to the obtained voice pattern is determined as the matched identification information.

When it is determined that the matched identification information matched to the input information does not exist, that is, when identification information having more than a certain matching degree to the input information does not exist, the control object selecting apparatus may wait before the input information is obtained again, or may request for the user to make a voice again. For example, referring to FIG. 3, when the identification information 'backward,' 'play,' and 'forward' exist, and also when the input information is obtained from the user's voice "reverse," the matched identification information matched to the obtained input information may not exist. Here, in order to obtain the input information matched to the identification information, it may be inefficient to receive the user's voice again.

Accordingly, when it is determined that the matched identification information matched to the input information does not exist, the control object selecting apparatus may allow user designation identification information to correspond to a control object and allow the user designation identification information to serve as the identification information about the control object.

Here, the user designation identification information is identification information designated by the user so as to serve as the identification information about the control object, and may include a voice pattern. At this time, the voice pattern may be a voice pattern obtained from the voice of the user in step S100.

When the voice pattern serving as the user designation identification information corresponds to a control object to function as the identification information about the control object, and also when the same voice pattern as the voice pattern or a voice pattern similar to the voice pattern is obtained, the control object corresponding to the voice pattern can be selected.

Meanwhile, when it is determined that the matched identification information matched to the input information exists, the control object selecting apparatus obtains the matched identification information (S130).

For example, referring to FIG. 3, when input information "play" is obtained from the voice of the user, the identification information 'play' among the identification information `backward,' 'play,' and 'forward' corresponds to the matched identification information.

When the matched identification information is obtained, the control object selecting apparatus selects a control object corresponding to the matched identification information (S140).

Here, the selecting of the control object may be performed through an input event or a selection event.

The event means an occurrence or an action detected from the program, and examples of the event may include an input event for processing an input, an output event for processing an output, and a selection event for selecting a certain object.

The input event may be generated when an input such as a click, a touch or a key stroke is applied through an input device such as a mouse, a touchpad, a touch screen or a keyboard, or may be generated by processing an input as being virtually applied even though an actual input is not applied through the aforementioned input device.

Meanwhile, the selection event may be generated to select a certain control object, and the certain control object may be selected when the aforementioned input event, for example, a double click event or a tap event, occurs for the certain control object.

As described above, in accordance with the control object selecting apparatus according to the exemplary embodiment of the present invention, even when the control commands are not previously stored in an application, since the electronic device can be controlled through the voice recognition, accessibility of the user to the electronic device can be improved.

Meanwhile, according to the exemplary embodiment of the present invention, the symbol may be obtained based on application screen information.

When the control object is displayed on the application screen, and also when the optical character recognition is performed on the application screen, information that can be recognized as text or a character sign within the application screen can be obtained.

However, when only the information that can be recognized as text or a character sign within the application screen, it is required to determine whether or not the information is the symbol, and to determine the control object corresponding to the symbol when the information is the symbol.

Accordingly, the control object selecting apparatus may determine the control object to be displayed in a first area within the application screen where the information that can be recognized as text or a character sign is displayed and a second area corresponding to the first area, and may associate the information that can be recognized as text or a character sign in the first area with the control object in the second area, as the symbol.

Here, the second area corresponding to the first area where the information that can be recognized as text or a character sign is displayed may be an area including at least a part of a block where the text or the character sign is displayed, an area closest to the block where the text or the character sign is displayed, or an area such as an upper end or a lower end of the block where the text or the character sign is displayed. Here, the second area corresponding to the first area is not limited to the aforementioned areas, and may be determined in various manners. Meanwhile, in order to determine the control object to be displayed in the second area, the display information about the control object may be referred.

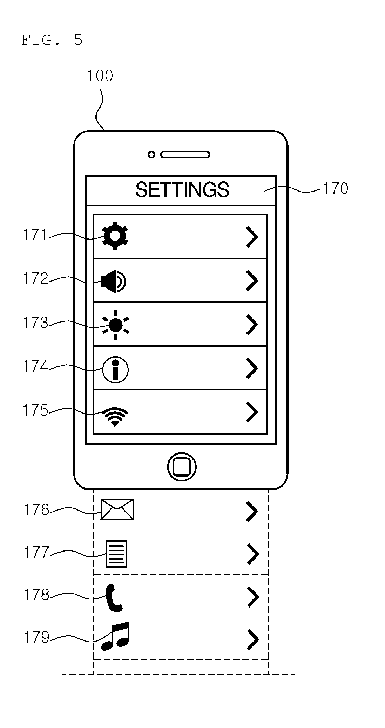

On the other hand, the control object selecting apparatus may obtain the identification information about the control object regardless of whether or not the control object or the application screen is displayed. The relevant description thereof will be described now with reference to FIG. 5.

FIG. 5 illustrates a schematic diagram of the control object selecting apparatus according to the exemplary embodiment of the present invention.

Referring to FIG. 5, a range to be displayed to the user may be limited depending on a screen resolution of the control object selecting apparatus 100.

However, since the symbol is obtained based on the information about the control object, the symbol may be obtained regardless of whether or not the control object is actually displayed, and the identification information corresponding to the obtained symbol may be determined.

As illustrated in FIG. 5, symbols of control objects 176, 177, 178 and 179 that are not displayed as well as control objects 171, 172, 173, 174 and 175 that are displayed on an application screen 170 may be obtained.

Accordingly, the control objects 176, 177, 178 and 179 that are not displayed may also be selected through the voice recognition, and when the control objects 176, 177, 178 and 179 that are not displayed are selected, the screen may be auto-scrolled up to positions where the control objects are positioned.

As described above, according to the control object selecting apparatus according to the exemplary embodiment of the present invention, the symbol of the control object can be obtained based on the screen or the control object that is not displayed.

Meanwhile, the control object selecting apparatus according to the exemplary embodiment of the present invention may output the matched identification information and the identification information about the control object as voices.

By outputting the identification information about the control object as a voice, a guideline on words that can be recognized by the control object selecting apparatus can be provided to the user, and by outputting the matched identification information as a voice, the word that is finally recognized from the voice of the user can recognize. Accordingly, the user can conveniently select the control object without seeing the screen of the control object selecting apparatus.

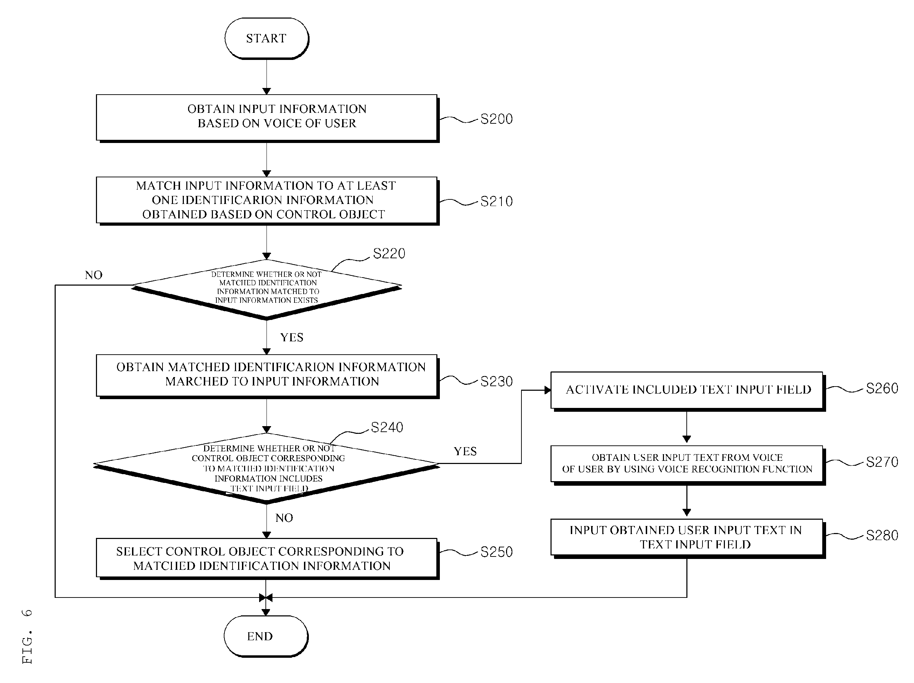

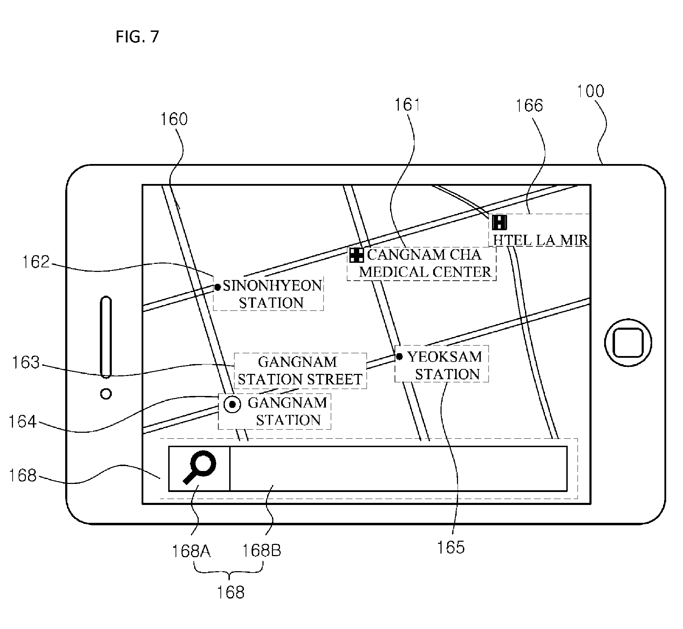

Meanwhile, according to the exemplary embodiment of the present invention, when the control object includes the text input field, the text may be input in the text input field through the voice recognition. A configuration in which the text input field included in the control object is activated through the voice recognition and the text is input in the text input field will be explained with reference to FIGS. 6 and 7.

FIG. 6 illustrates a flowchart of a method for selecting a control object according to an exemplary embodiment of the present invention.

FIG. 7 illustrates a schematic diagram of the control object selecting apparatus according to an exemplary embodiment of the present invention.

The control object selecting apparatus obtains input information on the basis of the voice of the user (S200).

When the input information is obtained, the control object selecting apparatus matches the input information to at least one identification information corresponding to a symbol obtained based on the control object (S210).

Referring to FIG. 7, a 'search control object' 168 includes a 'magnifying glass button' 168A and a text input field 168B, and the symbol 'magnifying glass' 368 (see FIG. 4) obtained based on the 'magnifying glass button' 168A may correspond to the identification information 'search' 468 (see FIG. 4).

As a matching result of the obtained identification information to the input information, the control object selecting apparatus determines whether or not matched identification information to be matched to the input information exists (S220).

When it is determined that the matched identification information to be matched to the input information exists, the control object selecting apparatus obtains the matched identification information (S230).

Steps S200, S210, S220 and S230 are substantially the same as steps S100, S110, S120 and S130 described in FIG. 2, and thus the redundant descriptions thereof will not be presented.

When the matched identification information is obtained, the control object selecting apparatus determines whether or not the control object corresponding to the matched identification information includes a text input field (S240).

The user may select the text input field in order to input text in the text input field. Accordingly, when the control object includes the text input field, the text may be input in the text input field.

When the control object corresponding to the matched identification information does not include the text input field, the control object selecting apparatus selects the control object corresponding to the matched identification information (S250). Since step S250 is substantially the same as step S140 described in FIG. 2, the redundant description thereof will not be presented.

When the control object corresponding to the matched identification information includes the text input field, the control object selecting apparatus activates the text input field (S260).

When the input information is obtained from the user's voice "search," the obtained input information may be matched to the identification information "search," and since the 'search control object' 168 corresponding to the matched identification information `search' includes the text input field 168B, the text input field 168B can be activated.

An insertion bar is positioned within the activated text input field.

When the text input field is activated, the control object selecting apparatus obtains user input text from the voice of the user by using a voice recognition function (S270).

That is, a voice signal of the user received after the text input field is activated is not recognized as the input information to be matched to the identification information, and is converted into the user input text to be input in the text input field.

When the user input text is obtained, the control object selecting apparatus inputs the obtained user input text in the text input field included in the control object (S280).

When the user input text is input in the text input field, the text input field is not activated, and the control object selecting apparatus may select the control object again through the voice recognition.

Alternatively, when certain input information indicating that the input of the user input text ends, for example, the identification information 'end,' 'ok,' or 'next' is obtained, the text input field is not activated, and the control object selecting apparatus may select the control object again through the voice recognition.

Meanwhile, according to the exemplary embodiment of the present invention, the input information may text itself recognized by further comparing the voice pattern information obtained from the voice of the user with a language model DB.

When the input information is text recognized from the voice of the user through the voice recognition, the matching of the input information to the identification information may performed by comparing the recognized text with the identification information itself.

When it is determined that the matched identification information matched to the input information does not exist, that is, when identification information having more than a certain matching degree to the input information does not exist, the control object selecting apparatus may wait before the input information is obtained again, or may request for the user to make a voice again. For example, referring to FIG. 3, when the identification information 'backward,' 'play,' and 'forward' exist, and also when the input information is obtained from the user's voice "reverse," the matched identification information matched to the obtained input information may not exist. Here, in order to obtain the input information matched to the identification information, it may be inefficient to receive the user's voice again.

Accordingly, when it is determined that the matched identification information matched to the input information does not exist, the control object selecting apparatus may allow user designation identification information to correspond to a control object and allow the user designation identification information to serve as the identification information about the control object.

Here, the user designation identification information is identification information designated by the user so as to serve as the identification information about the control object, and may include text. At this time, the text may be text itself recognized by additionally comparing the voice pattern information obtained from the voice of the user with a language model DB.

In some examples, there are provided an apparatus and a method for selecting a control object through voice recognition. The apparatus for selecting a control object through voice recognition according to the present disclosure may include one or more processing devices, in which the one or more processing devices may be configured to obtain input information on the basis of a voice of a user, to match the input information to at least one identification information corresponding to a symbol obtained based on a control object, to obtain matched identification information matched to the input information among the identification information, and to select a control object corresponding to the matched identification information. There may be an advantage in that since an electronic device can be controlled through voice recognition even when using an application that does not store a control command in advance, accessibility of a user to the electronic device can be improved.

Combinations of each block of the accompanying block diagram and each step of the flow chart can be implemented by algorithms or computer program instructions comprised of firmware, software, or hardware. Since these algorithms or computer program instructions can be installed in processor of a universal computer, a special computer or other programmable data processing equipment, the instructions executed through a processor of a computer or other programmable data processing equipment generates means for implementing functions described in each block of the block diagram or each step of the flow chart. Since the algorithms or computer program instructions can be stored in a computer available or computer readable memory capable of orienting a computer or other programmable data processing equipment to implement functions in a specific scheme, the instructions stored in the computer available or computer readable memory can produce items involving an instruction means executing functions described in each block of the block diagram or each step of the flow chart. Since the computer program instructions can be installed in a computer or other programmable data processing equipment, a series of operation steps are carried out in the computer or other programmable data processing equipment to create a process executed by the computer such that instructions implementing the computer or other programmable data processing equipment can provide steps for implementing functions described in functions described in each block of the block diagram or each step of the flow chart.

Further, each block or each step may indicate a part of a module, a segment, or a code including one or more executable instructions for implementing specific logical function(s). Furthermore, it should be noted that in some alternative embodiments, functions described in blocks or steps can be generated out of the order. For example, two blocks or steps illustrated continuously may be implemented simultaneously, or the blocks or steps may be implemented in reverse order according to corresponding functions.

The steps of a method or algorithm described in connection with the embodiments disclosed in the present specification may be embodied directly in hardware, in a software module executed by a processor, or in a combination of the two. The software module may reside in RAM memory, flash memory, ROM memory, EPROM memory, EEPROM memory, register, hard disk, a removable disk, a CD-ROM, or any other form of storage medium known in the art. An exemplary storage medium is coupled to the processor such that the processor can read information from, and write information to, the storage medium. Otherwise, the storage medium may be integrated with the processor. The processor and the storage medium may reside in an application-specific integrated circuit (ASIC) . The ASIC may reside in a user terminal. Otherwise, the processor and the storage medium may reside as discrete components in a user terminal.

The present invention has been described in more detail with reference to the exemplary embodiments, but the present invention is not limited to the exemplary embodiments. It will be apparent to those skilled in the art that various modifications can be made without departing from the technical sprit of the invention. Accordingly, the exemplary embodiments disclosed in the present invention are used not to limit but to describe the technical spirit of the present invention, and the technical spirit of the present invention is not limited to the exemplary embodiments. Therefore, the exemplary embodiments described above are considered in all respects to be illustrative and not restrictive. The protection scope of the present invention must be interpreted by the appended claims and it should be interpreted that all technical spirits within a scope equivalent thereto are included in the appended claims of the present invention.

## Claims

1. An apparatus for selecting a control object through voice recognition, the apparatus comprising:
one or more processing devices,
wherein the one or more processing devices are configured:
to obtain input information on the basis of a voice of a user,
to match the input information to at least one identification information corresponding to a symbol obtained based on a control object,
to obtain matched identification information matched to the input information among the identification information, and
to select a control object corresponding to the matched identification information.

2. The apparatus for selecting a control object according to claim 1, wherein the symbol is obtained based on display information about the control object.

3. The apparatus for selecting a control object according to claim 2, wherein the symbol is obtained based on application screen information.

4. The apparatus for selecting a control object according to any one of claims 1 to 3, wherein the symbol is obtained through optical character recognition, OCR.

5. The apparatus for selecting a control object according to any one of claims 1 to 3, wherein the symbol is obtained through image pattern matching.

6. The apparatus for selecting a control object according to any one of claims 1 to 5, wherein the symbol corresponds to different identification information depending on applications run on the apparatus.

7. The apparatus for selecting a control object according to any one of claims 1 to 6, wherein the input information includes voice pattern information obtained by analyzing a feature of the voice of the user, and
the matching of the input information to the identification information includes matching of the identification information to the voice pattern information.

8. The apparatus for selecting a control object according to any one of claims 1 to 7,
wherein the input information includes text information recognized from the voice of the user through voice recognition, and
the matching of the input information to the identification information includes matching of the identification information to the text information.

9. The apparatus for selecting a control object according to any one of claims 1 to 8, wherein when the matched identification information matched to the input information does not exist, the one or more processing devices set user designation identification information so as to correspond to a control object.

10. A method for selecting a control object in a computing apparatus through voice recognition, the method comprising:
obtaining input information on the basis of a voice of a user;
matching the input information to at least one identification information corresponding to a symbol obtained based on a control object;
obtaining matched identification information matched to the input information among the identification information; and
selecting a control object corresponding to the matched identification information.

11. The method for selecting a control object according to claim 10, wherein the symbol is obtained based on display information about the control object, or
wherein the symbol is obtained based on application screen information.

12. The method for selecting a control object according to claim 10 or 11, wherein the symbol is obtained through optical character recognition, OCR.

13. The method for selecting a control object according to claim 10 or 11, wherein the symbol is obtained through image pattern matching.

14. The method for selecting a control object according to any one of claims 10 to 13, wherein the symbol corresponds to different identification information depending on applications run on the apparatus.

15. A computer-readable medium that stores command sets, wherein when the command sets are executed by a computing apparatus,
the command sets cause the computing apparatus:
to obtain input information on the basis of a voice of a user,
to match the input information to at least one identification information corresponding to a symbol obtained based on a control object,
to obtain matched identification information matched to the input information among the identification information, and
to select a control object corresponding to the matched identification information.
